# FASCICULE DE BREVET EUROPEEN

(11) **EP 4 377 952 B1**
(45) Date de publication et mention de la délivrance du brevet: **03.09.2025**
(21) Numéro de dépôt: 22754491.3
(22) Date de dépôt: 22.07.2022
(51) Int. Cl.: G10K 11/172

(54) **ÉLEMENT D'OBTURATION ACOUSTIQUE**
AKUSTISCHES DICHTELEMENT
ACOUSTIC SEALING ELEMENT

(30) Priorité: 29.07.2021 FR 2108252
(43) Date de publication de la demande: 05.06.2024
(73) Titulaire: Safran Nacelles, 76700 Gonfreville-l'Orcher (FR)
(72) Inventeur: GUILLOIS, Denis, 77550 Moissy-Cramayel (FR); CHAPELAIN, Loïc, décédé (FR); VERSAEVEL, Marc, 77550 Moissy-Cramayel (FR)
(74) Mandataire: Cabinet Beau de Loménie
(86) Numéro de dépôt international: PCT/FR2022/051470
(87) Numéro de publication internationale: WO 2023/007077

(56) Documents cités:
- EP-A1- 3 779 961
- FR-A1- 3 055 662
- US-A1- 2017 292 453

## Description

### Domaine Technique

La présente invention se rapporte au domaine général des structures d'atténuation acoustique. Elle concerne plus particulièrement les panneaux acoustiques utilisés dans les moteurs d'avion comme dans les turbines à gaz et autres turbomachines, pour réduire notamment les bruits générés par la soufflante ou par l'éjection des gaz au niveau de l'échappement.

### Technique antérieure

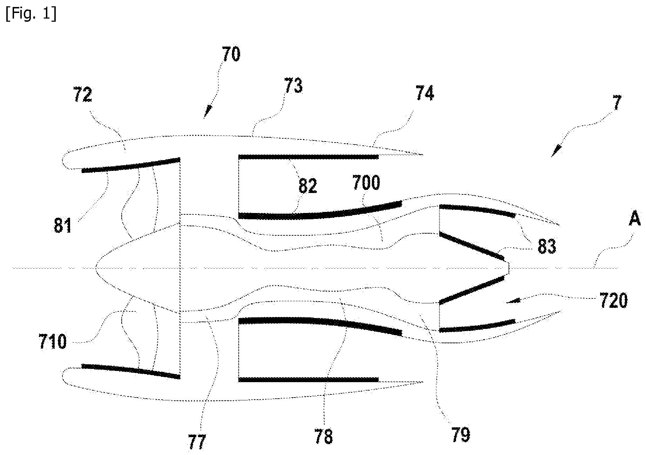

La figure 1 est une illustration d'un ensemble propulsif 7 s'étendant selon un axe longitudinal A comprenant une nacelle courte 70 et un turboréacteur 700. La turbomachine comprend notamment un compresseur 77, une chambre de combustion 78 et une turbine 79. La nacelle 70 présente une structure comprenant une section amont formant une entrée d'air 72, une section médiane 73 et une section avale 74 comprenant un inverseur de poussée. La section médiane 73 comprend des capots de soufflante destinés à entourer une soufflante 710 du turboréacteur 700. La section avale 74 est destinée à entourer la chambre de combustion 78 du turboréacteur et une tuyère d'éjection 720.

Des panneaux acoustiques 81 peuvent être disposés sur la face intérieure de l'entrée d'air 72 située en regard de la soufflante 710 pour réduire les bruits générés par ladite soufflante 710. Des panneaux acoustiques 82 peuvent être disposés sur la face intérieure de la section avale 74, au niveau des inverseurs de poussée, ou sur la face extérieure du turboréacteur 700 qui comprend la chambre de combustion 78. En outre, des panneaux acoustiques 83 peuvent être disposés au niveau de la tuyère 720, pour réduire les bruits générés par l'éjection des gaz au niveau de l'échappement.

Les panneaux acoustiques sont typiquement constitués d'une plaque ou peau de surface acoustique perméable aux ondes acoustiques que l'on souhaite atténuer et d'une plaque ou peau pleine réfléchissante dite « plaque de fermeture », un corps cellulaire étant disposé entre ces deux parois. Le corps cellulaire est généralement constitué par un ensemble de cloisons, par exemple en forme de nid d'abeille. De façon bien connue, de telles structures forment des résonateurs de type Helmholtz qui permettent d'atténuer dans une certaine gamme de fréquences les ondes acoustiques. Des panneaux acoustiques de ce type sont notamment décrits dans les documents US 5 912 442 et GB 2 314 526.

Les panneaux acoustiques peuvent être dotés d'ouvertures ou de cavités traversantes, permettant l'accès à des éléments situés derrière le panneau. Par exemple, un panneau acoustique peut être disposé proche de la surface d'une structure qui comprend des vis de fixation, auxquelles il est nécessaire d'avoir régulièrement accès.

Ces ouvertures ou cavités traversantes entraînent une forte baisse du traitement acoustique réalisé par le panneau acoustique. D'un part, la présence d'une ouverture ou d'une cavité traversante diminue les performances du panneau acoustique en réduisant la surface fonctionnelle dudit panneau. D'autre part, l'ouverture ou la cavité traversante provoque des discontinuités dans le traitement acoustique, dites « splices », qui vont modifier la structure du champ acoustique en repoussant l'énergie qui se propage dans le panneau acoustique. Ainsi, la baisse de performance acoustique est très supérieure à la baisse de performance due uniquement à la perte de surface fonctionnelle acoustique.

En outre, de telles ouvertures ou cavités dans le panneau acoustique peuvent mener à des problématiques d'étanchéité du panneau acoustique.

Le document EP 3 779 961 décrit un panneau acoustique comprenant une plaque en matériau absorbant disposée entre une peau résistive et une peau arrière, la plaque étant pourvue d'une pluralité de logements dans lesquels sont fixés des éléments acoustiques.

### Exposé de l'invention

La présente invention a donc pour but principal de remédier aux inconvénients précités.

Conformément à l'invention, ce but est atteint grâce à un ensemble acoustique comprenant un panneau acoustique multicellulaire présentant au moins une cavité traversante selon une direction X, caractérisé en ce que l'ensemble acoustique comprend en outre au moins un élément d'obturation comprenant un corps renfermant une ou plusieurs cellules acoustiques, le corps pouvant être inséré dans la cavité et s'étendant selon la direction X entre une première face et une deuxième face, l'élément d'obturation comprenant en outre un joint sur la deuxième face du corps apte à assurer l'étanchéité avec le panneau acoustique. Le joint est également apte à assurer le maintien de l'élément d'obturation dans le panneau acoustique.

Ainsi, l'utilisation d'un élément d'obturation ayant des propriétés d'atténuation acoustique permet de minimiser l'impact de la ou des cavités traversantes sur la performance acoustique de l'ensemble. En effet, l'élément d'obturation réduit fortement la perte de surface fonctionnelle acoustique et n'entraîne pas d'irrégularités importantes dans la structure du champ acoustique global. Le joint permet d'assurer le maintien de l'élément d'obturation dans le panneau acoustique, en réalisant en outre l'étanchéité du panneau acoustique.

L'élément d'obturation peut être aisément retiré si nécessaire, pour accéder à des structures ou systèmes de fixation situés derrière le panneau acoustique, et peut être replacé ensuite.

Selon une caractéristique particulière de l'invention, le corps de l'élément d'obturation épouse la forme de la cavité lorsqu'il est inséré dans ladite cavité.

Selon une caractéristique particulière de l'invention, le joint de l'élément d'obturation est déformable entre une position de repos ou d'étanchéité, dans laquelle le joint s'étend au-delà de la périphérie du corps perpendiculairement à la direction X, et une position de montage ou de démontage, dans laquelle le joint ne s'étend pas au-delà de la périphérie du corps perpendiculairement à la direction X.

Selon une autre caractéristique particulière de l'invention, l'élément d'obturation comprend en outre un passage s'étendant depuis le joint et débouchant sur la première face du corps, configuré pour permettre l'insertion d'un objet apte à déformer le joint de sa position de repos à sa position de montage ou de démontage.

Selon une autre caractéristique particulière de l'invention, le passage comprend au moins une portion taraudée.

Le taraudage du passage de l'élément d'obturation, en combinaison avec le filetage de l'objet inséré, permet de faciliter le maintien du joint dans sa position de montage ou de démontage lors des manipulations de l'élément d'obturation. En outre, le taraudage du passage et le filetage de l'objet inséré peuvent faciliter le montage et le démontage de l'élément d'obturation, en permettant par exemple l'utilisation d'un extracteur de vis.

Selon une autre caractéristique particulière de l'invention, chaque cellule du panneau acoustique et chaque cellule de l'élément d'obturation comprend un élément acoustique creux ayant une forme se rétrécissant progressivement entre une base et un sommet.

Selon une autre caractéristique particulière de l'invention, l'impédance acoustique de la ou des cellules acoustiques de l'élément d'obturation a une valeur comprise entre 90% et 110% de la valeur de l'impédance acoustique des cellules du panneau acoustique.

Selon une autre caractéristique particulière de l'invention, l'élément d'obturation présente une symétrie axiale.

La symétrie axiale peut être selon l'axe X qui coupe la première surface et la deuxième surface du corps de l'élément d'obturation en leur centre.

L'invention concerne en outre un procédé de montage d'un ensemble acoustique conformément à l'invention, comprenant le placement d'au moins un élément d'obturation dans au moins une cavité traversante du panneau acoustique multicellulaire, ledit élément d'obturation occupant le volume défini par la cavité de sorte que la première face du corps de l'élément d'obturation soit située dans le prolongement d'une première face du panneau acoustique et que le joint de l'élément d'obturation réalise l'étanchéité entre la deuxième face du corps de l'élément d'obturation et une deuxième face du panneau acoustique opposé à la première face du panneau.

Selon une caractéristique particulière de l'invention, le placement de l'élément d'obturation comprend les étapes suivantes :
- l'insertion d'un objet à l'intérieur du passage pour déformer le joint de sa position de repos ou d'étanchéité à sa position de montage ou de démontage,
- la placement de l'élément d'obturation dans la cavité du panneau acoustique multicellulaire en maintenant le joint d'étanchéité dans sa position de montage ou de démontage, ledit élément d'obturation occupant le volume défini par la cavité de sorte que la première face du corps de l'élément d'obturation soit située dans le prolongement d'une première face du panneau acoustique,
- le retrait de l'objet inséré dans le passage pour permettre au joint de reprendre sa position de repos ou d'étanchéité, de sorte que le joint réalise l'étanchéité entre la deuxième face du corps de l'élément d'obturation et une deuxième face du panneau acoustique opposé à la première face.

L'invention concerne en outre un procédé de démontage d'un ensemble acoustique conformément à l'invention, comprenant le retrait d'au moins un élément d'obturation d'une cavité traversante du panneau acoustique multicellulaire par déformation du joint dudit élément d'obturation.

Selon une caractéristique particulière de l'invention, le retrait de l'élément d'obturation comprend les étapes suivantes :
- l'insertion d'un objet à l'intérieur du passage pour déformer le joint de sa position de repos ou d'étanchéité à sa position de montage ou de démontage,
- le retrait de l'élément d'obturation de la cavité du panneau acoustique multicellulaire en maintenant le joint d'étanchéité dans sa position de montage ou de démontage.

L'invention concerne en outre un procédé de réparation d'un panneau acoustique multicellulaire comprenant une zone endommagée, comprenant les étapes suivantes :
- la réalisation d'au moins une cavité traversante selon une direction X par retrait des cellules présentes au moins en partie dans la zone endommagée,
- la fourniture d'au moins un élément d'obturation comprenant un corps renfermant une ou plusieurs cellules acoustiques, le corps épousant la forme de la cavité et s'étendant selon la direction X entre une première face et une deuxième face, l'élément d'obturation comprenant en outre un joint sur la deuxième face,
- le placement dudit élément d'obturation dans la cavité traversante, l'élément d'obturation occupant le volume défini par la cavité de sorte que la première face du corps de l'élément d'obturation soit située dans le prolongement d'une première face du panneau acoustique et que le joint de l'élément d'obturation réalise l'étanchéité entre la deuxième face du corps de l'élément d'obturation et une deuxième face du panneau acoustique opposé à la première face.

Selon une caractéristique particulière de l'invention, le joint de l'élément d'obturation est déformable entre une position de repos ou d'étanchéité, dans laquelle le joint s'étend au-delà de la périphérie du corps perpendiculairement à la direction X, et une position de montage ou de démontage, dans laquelle le joint ne s'étend pas au-delà de la périphérie du corps perpendiculairement à la direction X, et dans lequel l'élément d'obturation comprend en outre un passage s'étendant depuis le joint et débouchant sur la première face du corps, le placement de l'élément d'obturation comprenant les étapes suivantes :
- l'insertion d'un objet à l'intérieur du passage pour déformer le joint de sa position de repos ou d'étanchéité à sa position de montage ou de démontage,
- la placement de l'élément d'obturation dans la cavité du panneau acoustique multicellulaire en maintenant le joint dans sa position de montage ou de démontage, ledit élément d'obturation occupant le volume défini par la cavité de sorte que la première face du corps de l'élément d'obturation soit située dans le prolongement d'une première face du panneau acoustique,
- le retrait de l'objet inséré dans le passage pour permettre au joint de reprendre sa position de repos ou d'étanchéité, de sorte que le joint réalise l'étanchéité entre la deuxième face du corps de l'élément d'obturation et une deuxième face du panneau acoustique opposé à la première face.

Finalement, l'invention concerne un élément d'obturation comprenant un corps s'étendant selon une direction X entre une première face et une deuxième face et renfermant une ou plusieurs cellules acoustiques, la première face comprenant une ou plusieurs peaux acoustiques, ledit élément d'obturation comprenant en outre une cavité d'étanchéité délimitée au moins par la deuxième face du corps et par un joint déformable.

Selon une caractéristique particulière de l'invention, le joint est déformable entre une position de repos ou d'étanchéité, dans laquelle le joint s'étend au-delà de la périphérie du corps perpendiculairement à la direction X, et une position de montage ou de démontage, dans laquelle le joint ne s'étend pas au-delà de la périphérie du corps perpendiculairement à la direction X.

Selon une autre caractéristique particulière de l'invention, l'élément d'obturation comprend en outre un passage s'étendant depuis la cavité d'étanchéité et débouchant sur la première face du corps, configuré pour permettre l'insertion d'un objet apte à déformer le joint de sa position de repos à sa position de montage ou de démontage.

Selon une autre caractéristique particulière de l'invention, l'élément d'obturation comprend en outre une platine rigide s'étendant perpendiculairement à la direction X de sorte que la cavité d'étanchéité soit délimitée par la deuxième face du corps, par le joint déformable et par la platine rigide, le joint déformable reliant les bords de la platine rigide à la deuxième face du corps.

### Brève description des dessins

[Fig. 1] La figure 1 est une vue schématique en coupe illustrant un ensemble propulsif de la technique antérieure comprenant des panneaux acoustiques.
[Fig. 2] La figure 2 est une vue en coupe illustrant un ensemble acoustique selon l'invention disposé contre une structure en vue éclatée.
[Fig. 3] La figure 3 est une vue 3D en coupe illustrant un élément d'obturation lorsque le joint est en position d'étanchéité, l'élément d'obturation étant inséré dans un panneau acoustique conformément à l'invention.
[Fig. 4] La figure 4 est une vue 3D en coupe illustrant l'élément d'obturation de la figure 3 lorsque le joint est en position de montage ou de démontage, l'élément d'obturation étant inséré dans un panneau acoustique.
[Fig. 5] La figure 5 est une vue 3D en coupe illustrant l'élément d'obturation des figures 3 et 4 lorsque le joint est en position de montage ou de démontage, l'élément d'obturation étant retiré du un panneau acoustique.
[Fig. 6] La figure 6 est une vue 3D en coupe illustrant l'élément d'obturation des figures 3, 4 et 5 lorsque le joint est en position de repos, l'élément d'obturation étant retiré du un panneau acoustique.
[Fig. 7] La figure 7 est une vue en coupe d'un panneau acoustique présentant une zone endommagée.
[Fig. 8] La figure 8 est une vue en coupe d'un ensemble acoustique conformément à l'invention, qui comprend le panneau acoustique de la figure 6 dans lequel la zone endommagée a été retirée et un élément d'obturation.
[Fig. 9] La figure 9 est une vue en coupe d'un élément d'obturation comprenant trois cellules acoustiques alignées conformément à l'invention.
[Fig. 10] La figure 10 est une vue en coupe d'un élément d'obturation comprenant trois cellules acoustiques placées en « triangle » conformément à l'invention.
[Fig. 11] La figure 11 est une vue 3D en coupe d'un élément d'obturation comprenant une unique cellule acoustique conformément à l'invention.

### Description des modes de réalisation

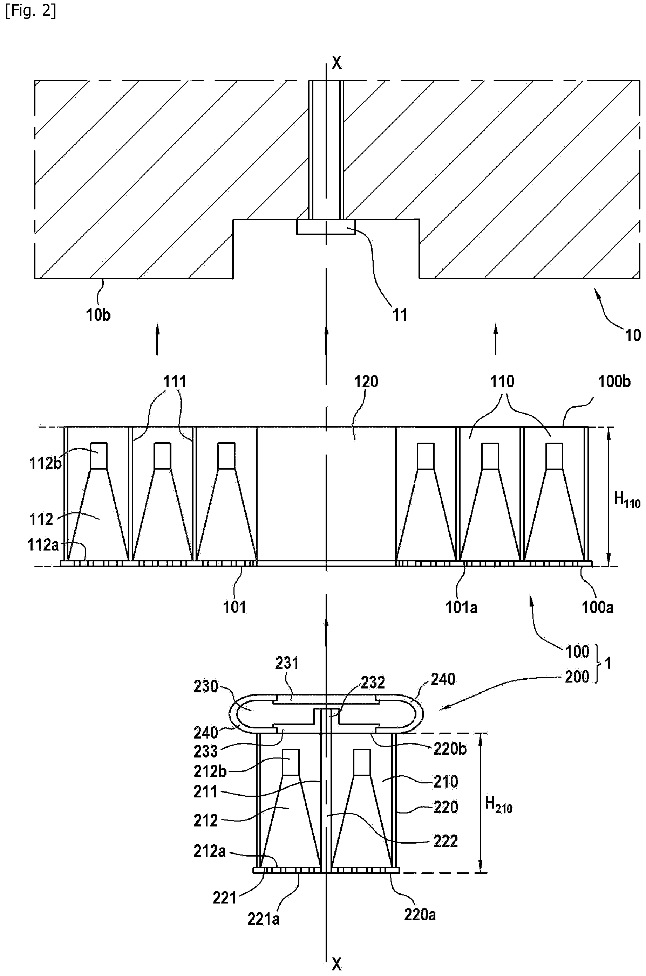

La figure 2 illustre un ensemble acoustique 1 disposé contre une structure 10, l'ensemble acoustique 1 comprenant un panneau acoustique 100 et un ou plusieurs éléments d'obturation 200.

En particulier, la figure 2 illustre un panneau acoustique 100 comprenant une pluralité de cellules acoustiques 110 s'étendant selon une direction X entre une première face 100a du panneau acoustique 100 et une deuxième face 100b du panneau acoustique 100 opposée à la première face 100a.

Le panneau acoustique 100 comprend une pluralité de cloisons 111 s'étendant entre la première face 100a et la deuxième face 110b du panneau acoustique, les cloisons formant un réseau de nervures délimitant les cellules acoustiques 110. La hauteur des cellules acoustiques 110 est choisie de sorte à obtenir un traitement de fréquences intéressantes selon l'utilisation qui sera faite du panneau acoustique 100.

Dans l'exemple présenté sur la figure 2, les cellules 110 du panneau acoustique 100 présentent une section ronde. On ne sort bien entendu pas du cadre de l'invention si les cellules du panneau acoustique présentent une section carrée, rectangulaire, hexagonale ou autre, par exemple une structure dite en « nid d'abeille ».

Dans l'exemple décrit ici, chaque cellule acoustique 110 du panneau acoustique 100 possède au moins un élément acoustique creux complexe 112 ayant une forme se rétrécissant progressivement entre une base 112a et un sommet 112b. On ne sort bien entendu pas du cadre de l'invention si seulement une partie des cellules acoustiques du panneau acoustique possède un tel élément acoustique, ou si aucune des cellules acoustiques du panneau acoustique ne dispose d'un tel élément acoustique. Chaque cellule acoustique qui ne possède pas d'élément acoustique creux peut être uniquement constituée des cloisons qui la délimitent.

Dans l'exemple présenté sur la figure 2, les éléments acoustiques creux 112 du panneau acoustique 100 présentent une forme pyramidale. On ne sort cependant pas du cadre de l'invention si les éléments acoustiques creux du panneau acoustique présentent par exemple une forme conique, en spirale ou en entonnoir. Dans l'exemple présenté sur la figure 2, les éléments acoustiques creux 112 du panneau acoustique 100 présentent une symétrie de révolution. On ne sort cependant pas du cadre de l'invention si les éléments acoustiques creux sont asymétriques.

De préférence, les éléments acoustiques creux 112 du panneau acoustique 100 ont une épaisseur inférieure à 1 mm, par exemple comprise entre 0,3 mm et 0,5 mm. De préférence, la base 112a des éléments acoustiques creux 112 est incluse dans un cercle dont le diamètre est compris entre 5 mm et 50 mm. Par exemple, la base 112a des éléments acoustiques creux 112 est incluse dans un cercle de 32 mm de diamètre. De préférence, la hauteur H₁₁₀ des cellules acoustiques 110 est comprise entre 5 mm et 100 mm. Par exemple, la hauteur H₁₁₀ des cellules acoustiques 110 est de 65 mm.

La première face 100a du panneau acoustique 100 est recouverte par une peau acoustique supérieure 101. La peau acoustique supérieure 101 a pour fonction de laisser passer les ondes sonores à atténuer à l'intérieur du panneau acoustique 100. A cet effet, la peau acoustique 101 comprend une pluralité de perforations 101a dans l'exemple décrit sur la figure 2. La peau acoustique 101 peut être réalisée en matériau composite, par exemple à base de fibres de carbone.

Le panneau acoustique 100 peut être réalisé de manière bien connue en matériau polymère, composite ou métallique, par fabrication additive ou selon les moyens conventionnels.

Dans l'exemple présenté sur la figure 2, la direction X dans laquelle s'étendent les cellules acoustiques 110 est perpendiculaire à la première face 100a et à la deuxième face 100b du panneau acoustique 100. On ne sort bien entendu pas du cadre de l'invention si la direction selon laquelle les cellules acoustiques sont dirigées est inclinée, c'est-à-dire n'est pas perpendiculaire à la première face ou à la deuxième face du panneau acoustique.

La deuxième face 100b du panneau acoustique 100 peut être recouverte par une peau de fermeture, destinée à réfléchir les ondes sonores entrant dans les cellules 110 du panneau acoustique 100, particulièrement dans le cas où la deuxième face 100b du panneau acoustique 100 n'est pas disposée contre une structure.

La deuxième face 100b du panneau acoustique 100 peut être disposée contre ou à proximité de la surface 10b d'une structure 10, par exemple un moteur d'avion, une entrée d'air ou un inverseur, comme dans l'exemple décrit sur les la figure 2. Le panneau acoustique 100 peut correspondre à l'un des panneaux 81, 82 ou 83 décrits en lien avec la figure 1. On ne sort bien entendu pas du cadre de l'invention si le panneau acoustique est utilisé pour une structure qui n'est pas un moteur d'avion, ou même qui n'est pas une turbomachine. Ainsi, la deuxième face 100b du panneau acoustique 100 épouse de préférence la forme de la surface 10b de la structure 10, qui peut ne pas être plane. La structure 10 peut comprendre des portions ou des éléments à sa surface 10b auxquels il est nécessaire d'avoir accès, par exemple des vis de fixations 11.

A cet effet, une ou plusieurs cavités traversantes 120 orientées selon la direction X sont présentes dans le panneau acoustique 100, la ou les cavités traversantes 120 s'étendant entre la première face 100a et la deuxième face 100b du panneau acoustique 100. De préférence, ces cavités traversantes 120 sont placées de sorte à permettre l'accès à des portions ou à des éléments à la surface 10b de la structure 10, par exemple aux vis de fixations 11 comme illustré sur la figure 2. De préférence, les parois des cavités traversantes 120 correspondent aux cloisons extérieures de cellules acoustiques 110 du panneau acoustique 100, c'est-à-dire qu'aucune des cellules acoustiques 110 ou des cloisons 111 du panneau acoustique 100 n'est « coupée » ou tronquée par une cavité traversante 120. Ainsi, de préférence, la ou les cavités 120 s'étendent dans la même direction que les cellules acoustiques 110 du panneau acoustique 100.

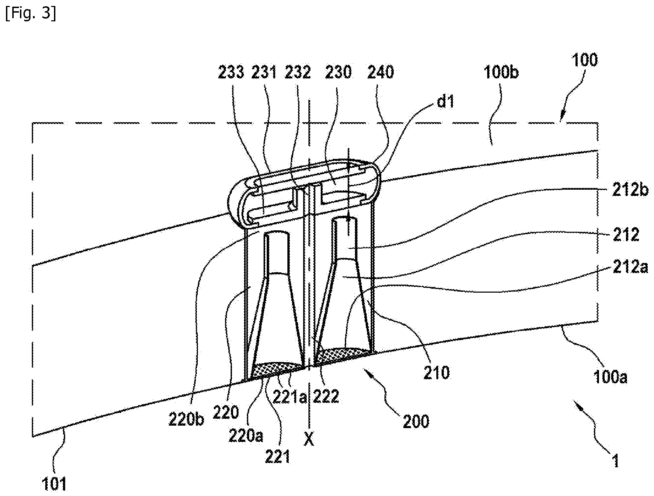

L'ensemble acoustique 1 illustré sur les figures 2 à 6 comprend, en outre du panneau acoustique 100, un ou plusieurs éléments d'obturation 200. Le nombre d'éléments d'obturations 200 peut être égal au nombre de cavités traversantes 120 du panneau acoustique 100. Afin de simplifier les figures et d'améliorer leur lisibilité, les cellules acoustiques 110 du panneau acoustique 100 ne sont pas représentées sur les figures 3 à 6.

Chaque élément d'obturation 200 comprend un corps 220, dont la forme épouse la forme de la cavité traversante 120 dans laquelle il est configuré pour s'insérer. Le corps 220 peut être réalisé en matériau thermoplastique, par exemple par fabrication additive ou injection thermoplastique. On ne sort bien entendu pas du cadre de l'invention si la forme extérieure du corps n'est pas complémentaire de la cavité traversante, pourvu que l'insertion du corps dans ladite cavité soit permise par la géométrie extérieure du corps et par la géométrie intérieure de la cavité.

Le corps 220 de l'élément d'obturation 200 renferme deux cellules acoustiques 210 s'étendant selon la direction X entre une première face 220a du corps 220 et une deuxième face 220b du corps 220 opposée à la première face 220a. Les cellules acoustiques 210 sont délimitées par des cloisons 211 s'étendant entre la première face 220a et la deuxième face 220b du corps 220.

Dans l'exemple présenté sur les figures 2 à 6, les cellules 210 de l'élément d'obturation 200 présentent une section ronde. On ne sort bien entendu pas du cadre de l'invention si les cellules de l'élément d'obturation présentent une section carrée, rectangulaire, hexagonale ou autre, par exemple une structure dite en « nid d'abeille ». De préférence, les cellules acoustiques 210 de l'élément d'obturation 200 présentent une géométrie identique à celles des cellules acoustiques 110 du panneau acoustique 100.

Dans l'exemple décrit ici, chaque cellule acoustique 210 de l'élément d'obturation 200 possède au moins un élément acoustique creux complexe 212 ayant une forme se rétrécissant progressivement entre une base 212a et un sommet 212b. On ne sort bien entendu pas du cadre de l'invention si seulement une partie des cellules acoustiques de l'élément d'obturation possède un tel élément acoustique, ou si aucune des cellules acoustiques de l'élément d'obturation ne dispose d'un tel élément acoustique. De préférence, si le panneau acoustique 100 présente des éléments acoustiques creux 112, l'élément d'obturation 200 présente également des éléments acoustiques creux 212.

Dans l'exemple présenté sur les figures 2 à 6, les éléments acoustiques creux 212 de l'élément d'obturation 200 présentent une forme pyramidale. On ne sort cependant pas du cadre de l'invention si les éléments acoustiques creux présentent par exemple une forme conique, en spirale ou en entonnoir. Dans l'exemple présenté sur les figures 2 à 6, les éléments acoustiques creux 112 de l'élément d'obturation 200 présentent une symétrie de révolution. On ne sort cependant pas du cadre de l'invention si les éléments acoustiques creux sont asymétriques. De préférence, les éléments acoustiques creux 212 de l'élément d'obturation 200 présentent une géométrie identique à celles des éléments acoustiques creux 112 du panneau acoustique 100.

De préférence, les éléments acoustiques creux 212 de l'élément d'obturation 200 ont une épaisseur inférieure à 1 mm, par exemple comprise entre 0,3 mm et 0,5 mm. De préférence, la base 212a des éléments acoustiques creux 212 est incluse dans un cercle dont le diamètre est compris entre 5 mm et 50 mm. Par exemple, la base 212a des éléments acoustiques creux 112 est incluse dans un cercle de 32 mm de diamètre. De préférence, la hauteur H₂₁₀ des cellules acoustiques 210 est comprise entre 5 mm et 100 mm. Par exemple, la hauteur H₂₁₀ des cellules acoustiques 210 est de 60 mm.

De préférence, la valeur de l'impédance des cellules acoustiques 210 de l'élément d'obturation 200 est identique ou proche de la valeur de l'impédance des cellules acoustiques 110 du panneau acoustique 100. En particulier, l'impédance acoustique des cellules acoustiques 210 de l'élément d'obturation 200 a une valeur comprise entre 90% et 110% de la valeur de l'impédance acoustique des cellules 110 du panneau acoustique 100. Par conséquent, la hauteur et la géométrie des cellules acoustiques 210 de l'élément d'obturation 200, la présence ou non d'éléments acoustiques creux complexes 212 dans lesdites cellules 210 et, le cas échéant, les caractéristiques desdits éléments acoustiques creux complexes 212, sont choisies de sorte à obtenir une impédance similaire à celle des cellules 110 du panneau acoustique 100. Par exemple, dans le cas où le panneau acoustique ne présente pas d'éléments acoustiques creux complexes, mais que les cellules acoustiques de l'élément d'obturation sont moins hautes que celles du panneau acoustique, il peut être intéressant d'ajouter des éléments acoustiques creux complexes dans les cellules acoustiques de l'élément d'obturation afin d'obtenir une impédance acoustique similaire entre les cellules du panneau acoustique et les cellules de l'élément d'obturation.

La première face 220a du corps 220 comprend une ou plusieurs peaux acoustiques supérieures 221, de sorte que chaque cellule acoustique 210 de l'élément d'obturation 200 est recouverte par une peau acoustique supérieure 221. La peau acoustique supérieure 221 a pour fonction de laisser passer les ondes sonores à atténuer à l'intérieur du corps 220 de l'élément d'obturation 200. A cet effet, la peau acoustique 221 comprend une pluralité de perforations 221a dans l'exemple décrit sur les figures 2 à 6. La peau acoustique supérieure 221 peut être réalisée en matériau composite, par exemple à base de fibres carbone.

Le corps 220 de l'élément d'obturation 200 comprend en outre un passage 222 s'étendant selon la direction X de la première face 220a du corps 220 à la deuxième face 220b du corps 220. Le passage 222 est de préférence situé au centre du corps 220, c'est-à-dire qu'il relie le centre de la première face 220a au centre de la deuxième face 220b. Le passage 222 est de préférence situé entre les cellules acoustiques 210 de l'élément d'obturation 200. Le passage 222 peut être taraudé. Le passage 222 peut être cylindrique et peut présenter une section de diamètre compris entre 3 mm et 10 mm, de préférence de 5 mm.

Le passage 222 débouche sur la première face 220a du corps 220, de préférence sur une portion de la première face 220a qui n'est pas recouverte par une peau acoustique supérieure 221, et sur la deuxième face 220b du corps 220.

L'élément d'obturation 200 comprend, en outre du corps 220, une cavité d'étanchéité 230 s'étendant depuis la deuxième face 220b du corps 220. Le passage 222 débouche dans la cavité d'étanchéité 230. La cavité d'étanchéité 230 est délimitée au moins par la deuxième face 220b du corps 220 et par le joint d'étanchéité et de maintien déformable 240. Comme illustré sur les figures 2 à 6, la cavité d'étanchéité 230 est délimitée par la deuxième face 220b du corps 220, par un joint d'étanchéité et de maintien déformable 240 et par une platine rigide 231. La platine rigide 231 peut être réalisée en plastique.

La platine rigide 231 s'étend perpendiculairement à la direction X et à une distance variable non nulle de la deuxième face 220b du corps 220. L'aire de la platine rigide 231 est inférieure à l'aire de la deuxième face 220b du corps 220. De préférence, la platine rigide 231 présente une épaisseur réduite selon X et s'étend perpendiculairement à X sur une surface ronde ou oblongue.

Le joint d'étanchéité déformable 240 ferme la cavité d'étanchéité 230 en joignant les bords de la platine rigide 231 à la deuxième face 220b du corps 220. Le joint déformable 240 peut former une courbe entre les bords de la platine rigide 231 et la deuxième face 220b du corps 220, dont le rayon peut être compris entre 5 mm et 10 mm, de préférence 8 mm.

La platine rigide 231 et le joint d'étanchéité 240 peuvent former une unique pièce. La platine rigide 231 peut également être absente de l'élément d'obturation, le joint d'étanchéité déformable jouant alors également le rôle de la platine rigide, sous réserve que le joint soit suffisamment renforcé dans sa partie située au-dessus du centre de la deuxième face 220b du corps 220.

Le joint d'étanchéité déformable 240 peut être fixé à la deuxième face 220b du corps 220 au moyen d'une platine de fixation 233. La platine de fixation 233 est fixée sur la deuxième face 220b du corps 220 et s'étend perpendiculairement à la direction X. L'aire de la platine de fixation 233 est inférieure à l'aire de la deuxième face 220b du corps 220 et la platine de fixation 233 s'étend sur la deuxième face 220b sans atteindre la périphérie de ladite deuxième face 220b. Le joint déformable 240 peut ainsi être fixé à la deuxième face 220b du corps 220 en étant présent entre la deuxième face 220b et l'extrémité de la platine de fixation 233.

La platine de fixation 233 comprend en son centre un orifice 232 situé dans le prolongement du passage 222 du corps 220, afin de permettre le passage d'un objet à travers la platine de fixation 233. L'orifice 232 peut être taraudé. Si le passage 222 est taraudé, les mêmes caractéristiques de taraudage sont utilisées pour l'orifice 232. La portion de la platine de fixation 233 située autour de l'orifice 232 peut s'étendre vers l'intérieur de la cavité 230, afin d'assurer un meilleur guidage de tout objet inséré à l'intérieur du passage 222 et de l'orifice 232.

La platine de fixation 233 peut être réalisée en plastique ou en métal.

Si l'élément d'obturation 200 ne comprend pas de platine de fixation, le passage 222 du corps 220 débouche directement dans la cavité d'étanchéité 230.

Le joint d'étanchéité 240 est déformable entre une première position, dite de repos ou d'étanchéité, et une deuxième position, dite de montage ou de démontage.

Dans sa première position, le joint d'étanchéité 240 s'étend perpendiculairement à la direction X au-delà de la périphérie du corps 220. Ainsi, si l'on prolonge virtuellement la surface latérale externe du corps 220 dans la direction X par des parois fictives délimitant une portion virtuelle, le joint d'étanchéité 240 s'étendra au-delà de cette portion virtuelle. Lorsque le joint d'étanchéité 240 est dans sa première position, la platine rigide 231 se trouve à une distance réduite d₁ de la deuxième face 220b du corps 220.

Dans sa deuxième position, le joint d'étanchéité 240 s'étend perpendiculairement à la direction X, mais pas au-delà de la périphérie du corps 220. Ainsi, si l'on prolonge virtuellement la surface latérale externe du corps 220 dans la direction X par des parois fictives délimitant une portion virtuelle, le joint d'étanchéité 240 s'étendra uniquement à l'intérieur de cette portion virtuelle. Lorsque le joint d'étanchéité 240 est dans sa deuxième position, la platine rigide 231 se trouve à une distance d₂ de la deuxième face 220b du corps 220. Lorsque le joint d'étanchéité 240 est dans sa deuxième position, la platine rigide 231 se trouve à une distance d₂ de la deuxième face 220b supérieure à la distance d₁ dans laquelle la platine 231 se trouve quand le joint 240 est dans sa première position.

Le joint d'étanchéité 240 doit être réalisé dans un matériau permettant sa déformation de la première à la deuxième position, et inversement, par exemple un élastomère silicone ou fluorosilicone, renforcé ou non. Le joint d'étanchéité 240 doit être réalisé dans un matériau adapté à la température à laquelle sera soumis ledit joint.

Selon un mode particulier de réalisation de l'invention, l'élément d'obturation présente au moins une symétrie axiale. Dans l'exemple présenté sur les figures 2à 6, l'élément d'obturation 200 présente une symétrie par rapport à l'axe X. Ainsi, l'élément d'obturation 200 peut être inséré dans les cavités traversantes 120 selon deux sens différents. On passe d'un sens à l'autre en effectuant une rotation de 108° autour de l'axe X.

Nous allons maintenant décrire un procédé de démontage de l'ensemble acoustique permettant de séparer le ou les éléments d'obturation du panneau acoustique. Un tel procédé peut notamment permettre d'accéder à des éléments situés derrière le panneau acoustique. Par exemple, le retrait de l'élément d'obturation 200 peut permettre d'accéder à une vis de fixation 11 située derrière le panneau acoustique 100 conformément à l'exemple illustré sur la figure 2.

La figure 3 illustre l'élément d'obturation 200 inséré dans une cavité traversante 120 du panneau acoustique 100. Dans cette configuration, le joint d'étanchéité 240 de l'élément d'obturation 200 est dans sa première position, dite d'étanchéité ou de repos, et réalise l'étanchéité entre l'élément d'obturation 200 et la deuxième face 100b du panneau acoustique 100. La première face 220a du corps 220 de l'élément d'obturation 200 est située dans le prolongement de la première face 100a du panneau acoustique 100. Ainsi, dans cette configuration, l'élément d'obturation 200 réalise l'étanchéité avec la deuxième face 100b du panneau acoustique 100 et permet une atténuation acoustique de toutes les ondes sonores dirigées vers la première face relativement uniforme de l'ensemble acoustique 1 assemblé, qui comprend la première face 100a du panneau acoustique 100 et la première face 220a du corps 220 de l'élément d'obturation 200. Par conséquent, l'élément d'obturation 200 assure une bonne performance acoustique de l'ensemble acoustique 1 assemblé malgré les cavités traversantes 120 présentes dans le panneau acoustique 100.

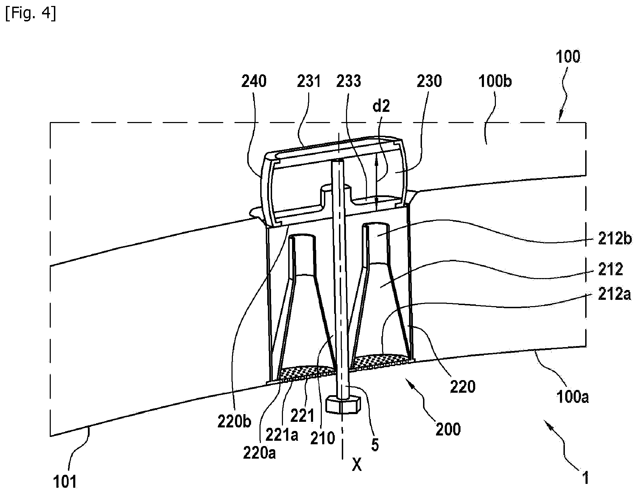

Pour procéder au retrait du ou des éléments d'obturation 200, on insère un objet 5 à l'intérieur du passage 222 du corps 220 et, si une platine de fixation 233 est présente dans la cavité d'étanchéité 230, à l'intérieur de l'orifice 232 de la platine de fixation 233, comme illustré sur la figure 4. L'objet 5 est inséré depuis la première face 220a du corps 220 de l'élément d'obturation 200 jusqu'à l'intérieur de la cavité d'étanchéité 230.

L'objet inséré 5 vient pousser contre la platine rigide 231, pour augmenter la distance entre la platine rigide 231 et la deuxième face 220b du corps 220. Si l'élément d'obturation ne comporte pas de platine rigide 231, l'objet inséré peut pousser directement sur le joint d'étanchéité 240, sous réserve que celui-ci soit suffisamment résistant.

Sous l'action de l'objet inséré 5, le joint déformable 240 se tend progressivement entre la platine rigide 231 et la deuxième face 220b du corps 220 jusqu'à atteindre sa deuxième position, dite de montage ou de démontage, illustrée sur la figure 4. Ainsi, le joint déformable 240 ne réalise plus l'étanchéité avec la deuxième face 220b du corps 220 et ne s'étend plus au-delà de la périphérie de la deuxième face 220b. Dans cette deuxième position, le joint déformable 240 est apte à traverser le panneau acoustique 100, c'est-à-dire à passer à l'intérieur de la cavité traversante 120 dans laquelle l'élément d'obturation 200 est inséré.

L'objet 5 inséré peut être une tige rigide, qui peut être filetée au moins en partie. L'objet 5 peut être une vis. De préférence, le filetage de l'objet 5 est adapté au taraudage du passage 222 du corps 220 et de l'orifice 232 de la platine de fixation 233 si ces derniers sont taraudés. L'objet 5 doit avoir une longueur suffisante pour permettre la déformation du joint de sa première position à sa deuxième position. Ainsi, l'objet 5 peut avoir une longueur de valeur comprise entre 150% et 250% de la longueur du corps 220 de l'élément d'obturation 200 dans la direction X. L'objet 5 peut comprendre un volume à son extrémité opposée à l'extrémité qui est insérée dans l'élément d'obturation 200, pour faciliter sa prise en main.

Lorsque le joint d'étanchéité 240 est déformé dans sa deuxième position, dite de montage ou de démontage, l'élément d'obturation 200 peut être retiré du panneau acoustique 100. Pour éviter d'abîmer le joint 240, la pression de l'objet 5 sur la platine rigide 231 doit être maintenue pendant le retrait de l'élément d'obturation 200. Cette pression peut être maintenue manuellement, ou au moyen du filetage de l'objet 5 et des taraudages du passage 222 et/ou de l'orifice 232.

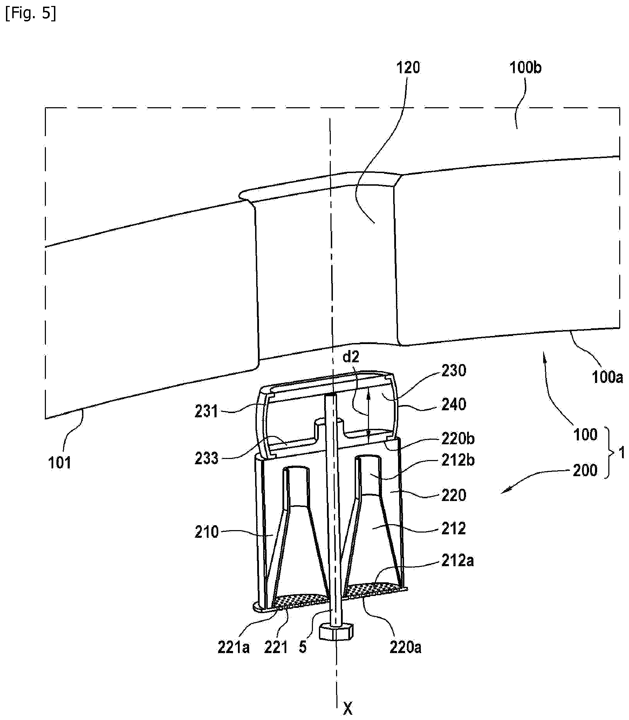

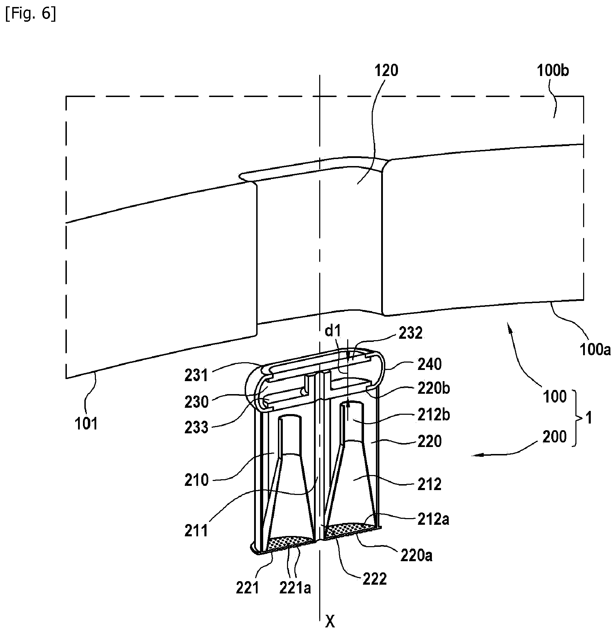

Lorsque l'élément d'obturation 200 est retiré, le joint 240 peut être maintenu en deuxième position par l'objet 5, comme illustré sur la figure 5, ou peut retrouver sa première position en retirant au moins en partie l'objet 5, comme illustré sur la figure 6.

Nous allons maintenant décrire un procédé de montage de l'ensemble acoustique permettant d'insérer le ou les éléments d'obturation dans le panneau acoustique. Un tel procédé peut notamment permettre de boucher les cavités traversantes présentes dans le panneau acoustique, qui ne permettent pas d'atténuer les ondes sonores, par un élément d'obturation capable d'atténuer les ondes sonores.

La figure 6 illustre l'élément d'obturation 200 séparé du panneau acoustique 100, qui comprend une cavité traversante 120 vide. Dans cette configuration, le joint d'étanchéité 240 de l'élément d'obturation 200 est dans sa première position, dite d'étanchéité ou de repos.

Pour procéder à l'insertion du ou des éléments d'obturation 200 dans le panneau acoustique 100, on insère un objet 5 à l'intérieur du passage 222 du corps 220 et, si une platine de fixation 233 est présente dans la cavité d'étanchéité 230, à l'intérieur de l'orifice 232 de la platine de fixation 233, comme illustré sur la figure 5. L'objet 5 est inséré depuis la première face 220a du corps 220 de l'élément d'obturation 200 jusqu'à l'intérieur de la cavité d'étanchéité 230.

L'objet inséré 5 vient pousser contre la platine rigide 231, pour augmenter la distance entre la platine rigide 231 et la deuxième face 220b du corps 220. Si l'élément d'obturation ne comporte pas de platine rigide 231, l'objet inséré peut pousser directement sur le joint d'étanchéité 240, sous réserve que celui-ci soit suffisamment résistant.

Sous l'action de l'objet inséré 5, le joint déformable 240 se tend progressivement entre la platine rigide 231 et la deuxième face 220b du corps 220 jusqu'à atteindre sa deuxième position, dite de montage ou de démontage, illustrée sur la figure 5. Dans cette deuxième position, le joint déformable 240 est apte à traverser le panneau acoustique 100, c'est-à-dire à passer à l'intérieur de la cavité traversante 120 pour permettre l'insertion de l'élément d'obturation 200 dans le panneau acoustique 100.

L'objet 5 peut posséder les mêmes caractéristiques que précédemment. Dans l'exemple présenté sur les figures 3 à 6, l'objet inséré dans le corps 220 de l'élément d'obturation 200 est identique pour le montage et le démontage. On ne sort bien entendu pas du cadre de l'invention si des éléments différents sont utilisés pour déformer le joint pour le montage et le démontage.

Lorsque le joint d'étanchéité 240 est déformé dans sa deuxième position, dite de montage ou de démontage, l'élément d'obturation 200 peut être inséré dans le panneau acoustique 100, comme illustré sur la figure 4. Pour éviter d'abîmer le joint 240, la pression de l'objet 5 sur la platine rigide 231 doit être maintenue pendant l'insertion de l'élément d'obturation 200. Cette pression peut être maintenue manuellement, ou au moyen du filetage de l'objet 5 et des taraudages du passage 222 et/ou de l'orifice 232.

Lorsque l'élément d'obturation 200 est mis en place dans la cavité traversante 120 du panneau acoustique 100, l'objet inséré 5 est retiré. Le joint d'étanchéité 240 retrouve ainsi sa première position, dite d'étanchéité ou de repos. Dans cette configuration, la première face 220a du corps 220 de l'élément d'obturation 200 est située dans le prolongement de la première face 100a du panneau acoustique 100. Ainsi, dans cette configuration, l'élément d'obturation 200 réalise l'étanchéité avec la deuxième face 100b du panneau acoustique 100 et permet une atténuation acoustique de toutes les ondes sonores dirigées vers la première face relativement uniforme de l'ensemble acoustique 1 assemblé, qui comprend la première face 100a du panneau acoustique 100 et la première face 220a du corps 220 de l'élément d'obturation 200. Par conséquent, l'élément d'obturation 200 assure une bonne performance acoustique de l'ensemble acoustique 1 assemblé malgré les cavités traversantes 120 présentes dans le panneau acoustique 100.

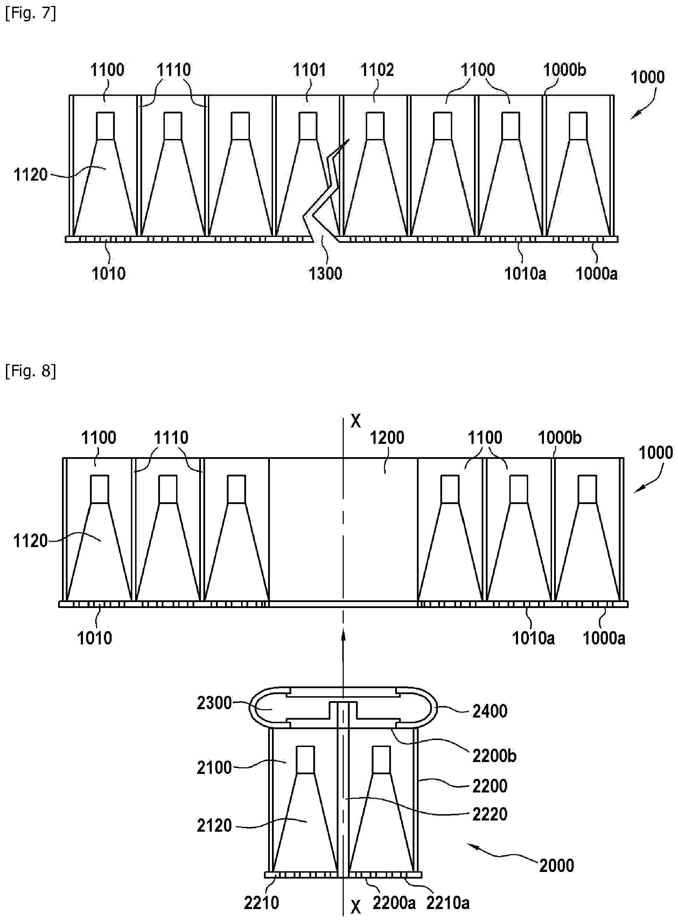

Nous allons maintenant décrire un procédé de réparation d'un panneau acoustique permettant de remplacer une zone endommagée dudit panneau acoustique. La figure 7 illustre par exemple un panneau acoustique 1000 comprenant une pluralité de cellules acoustiques 1100, dont deux cellules acoustiques adjacentes 1101 et 1102 qui ont été endommagées par un dégât ou un dommage 1300. Les cellules acoustiques 1100 sont délimitées par des cloisons 1110 et s'étendent entre une première face 1000a du panneau acoustique 1000 et une deuxième face 1000b du panneau acoustique 1000 opposée à la première face 1000b. Dans l'exemple présenté, les cellules acoustiques 1100 comprennent des éléments acoustiques creux complexes 1120. La première face 1000a du panneau acoustique 1000 est recouverte par une peau acoustique supérieure 1010, qui comprend une pluralité de perforations 1010a. Le panneau acoustique 1000 peut présenter toutes les caractéristiques et variations décrites précédemment dans le cadre de l'exemple du panneau acoustique 100.

On réalise une cavité traversante 1200 selon une direction X dans le panneau acoustique 1000, en retirant les cellules acoustiques 1101 et 1102 qui étaient au moins en partie endommagées, comme illustré sur la figure 8. En effet, il est plus intéressant d'un point de vue acoustique de retirer des cellules acoustiques complètes, pour pouvoir les remplacer par d'autres cellules acoustiques.

On utilise un élément d'obturation 2000 pour combler la cavité traversante 1200 ainsi formée, dont la forme du corps 2200 épouse la géométrie de ladite cavité traversante 1200. De préférence, l'impédance acoustique de l'élément d'obturation 2000 correspond globalement à l'impédance acoustique de la zone du panneau acoustique 1000 qui a été retirée.

Dans l'exemple illustré sur la figure 8, deux cellules acoustiques 1101 et 1102 ont été retirées du panneau acoustique 1000. Ainsi, pour obtenir une impédance acoustique similaire, l'élément d'obturation 2000 renferme également deux cellules acoustiques 2100 s'étendant selon la direction X entre une première face 2200a du corps 2200 et une deuxième face 2200b du corps 2200.

Les cellules acoustiques 2100 comprennent des éléments acoustiques creux complexes 2120 ayant une forme se rétrécissant progressivement entre une base et un sommet.

La première face 2200a du corps 2200 est recouverte par une ou plusieurs peaux acoustiques supérieures 2210, de sorte que chaque cellule acoustique 2100 de l'élément d'obturation 2000 est recouverte par une peau acoustique supérieure 2210, qui comprend une pluralité de perforations 2210a.

Le corps 2200 de l'élément d'obturation 2000 comprend en outre un passage 2220, qui peut présenter toutes les caractéristiques, fonctions et variations décrites précédemment. L'élément d'obturation 2000 comprend en outre une cavité 2300 délimitée au moins en partie par un joint 2400, ces derniers pouvant présenter toutes les caractéristiques, fonctions et variations décrites précédemment.

L'élément d'obturation 2000 peut alors être inséré dans le panneau acoustique 1000 selon le procédé de montage décrit précédemment, en déformant le joint 2400.

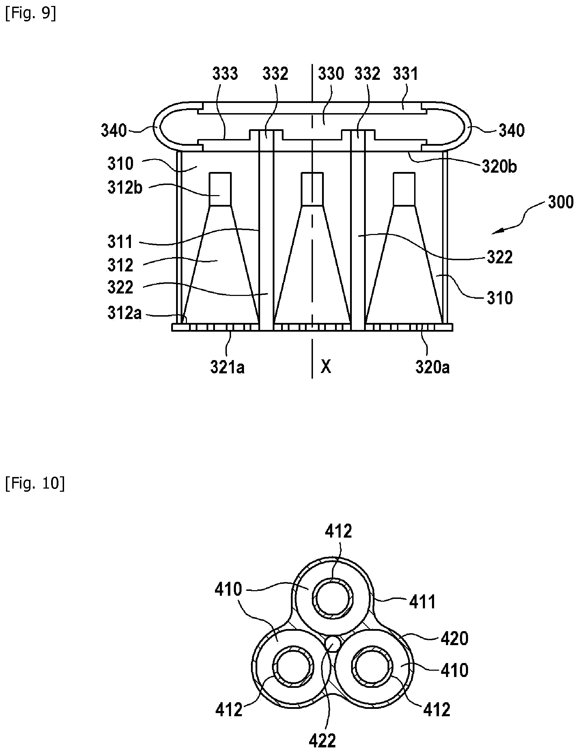

Dans les exemples présentés précédemment, le corps de l'élément d'obturation ne renferme que deux cellules acoustiques. On ne sort bien entendu pas du cadre de l'invention si l'élément d'obturation est adapté pour renfermer plus de deux cellules acoustiques, comme illustré sur les figures 9 et 10. La forme du joint d'étanchéité déformable et des platines est adaptée, et le nombre de passages peut être augmenté.

Selon un premier exemple, si l'élément d'obturation renferme plusieurs cellules acoustiques alignées en ligne ou si l'élément d'obturation présente des dimensions importantes, le nombre de passage peut être augmenté pour assurer la bonne déformation du joint d'étanchéité entre sa première position et sa deuxième position. Par exemple, la figure 9 illustre un élément d'obturation 300 comprenant un corps 320 renfermant trois cellules acoustiques 310 délimitées par des cloisons 311 s'étendant selon une direction X entre une première face 320a du corps 320 et une deuxième face 320b du corps 320. Les cellules acoustiques 310 comprennent des éléments acoustiques creux complexes 312 ayant une forme se rétrécissant progressivement entre une base 312a et un sommet 312b.

La première face 320a du corps 320 est recouverte par une ou plusieurs peaux acoustiques supérieures 321, de sorte que chaque cellule acoustique 310 de l'élément d'obturation 300 est recouverte par une peau acoustique supérieure 321, qui comprend une pluralité de perforations 321a.

Le corps 320 de l'élément d'obturation 300 comprend en outre deux passages 322 s'étendant selon la direction X de la première face 320a du corps 320 à la deuxième face 320b du corps 320. Chaque passage 322 est situé entre deux cellules acoustiques 310 de sorte que, dans chaque surface perpendiculaire à l'axe X, les centres des cellules acoustiques 310 et des passages 322 soient alignés. Les passages 322 peuvent être taraudés. Les passages 322 peuvent être cylindriques et peuvent présenter une section de diamètre compris entre 3 mm et 10 mm, de préférence de 5 mm.

Les passages 322 débouchent sur la première face 320a du corps 320, de préférence sur une portion de la première face 320a qui n'est pas recouverte par une peau acoustique supérieure 321, et sur la deuxième face 320b du corps 320.

L'élément d'obturation 300 comprend, en outre du corps 320, une cavité d'étanchéité 330 s'étendant depuis la deuxième face 320b du corps 320. Comme illustré sur la figure 9, la cavité d'étanchéité 330 est délimitée par la deuxième face 320b du corps 320, par un joint d'étanchéité déformable 340 et par une platine rigide 331.

La platine rigide 331 et le joint d'étanchéité 340 peuvent présenter toutes les caractéristiques et variations décrites précédemment, et leur forme est allongée pour s'adapter à la géométrie de l'élément d'obturation 300.

Le joint d'étanchéité déformable 340 peut être fixé à la deuxième face 320b du corps 320 au moyen d'une platine de fixation 333. La platine de fixation 333 peut présenter toutes les caractéristiques et variations décrites précédemment, mais comprend dans cet exemple deux orifices 332 situés dans le prolongement des deux passages 322, afin de permettre le passage d'un ou plusieurs éléments à travers la platine de fixation 333. Les orifices 332 peuvent être taraudés. Si les passages 322 sont taraudés, les mêmes caractéristiques de taraudage sont utilisées pour les orifices 332. Les portions de la platine de fixation 333 situées autour de l'orifice 332 peuvent s'étendre vers l'intérieur de la cavité 330, afin d'assurer un meilleur guidage de tout objet inséré à l'intérieur des passages 322 et des orifices 332.

Si l'élément d'obturation 300 ne comprend pas de platine de fixation, les passages 322 du corps 320 débouchent directement dans la cavité d'étanchéité 330.

La déformation du joint d'étanchéité 340 de sa première position à sa deuxième position peut être réalisée par l'insertion de deux objets distincts, ou par l'insertion d'un unique objet comprenant deux branches, chaque branche étant adaptée à l'un des passages 322.

Selon un deuxième exemple, si l'élément d'obturation renferme plusieurs cellules acoustiques qui ne sont pas alignées en ligne, le passage de l'élément d'obturation peut être placé au centre d'au moins trois cellules acoustiques pour assurer la bonne déformation du joint d'étanchéité entre sa première position et sa deuxième position. Par exemple, la figure 10 illustre un élément d'obturation 400 en coupe comprenant un corps 420 renfermant trois cellules acoustiques 410 disposées en « triangle » et délimitées par des cloisons 411 s'étendant entre une première face et une deuxième face du corps. Les cellules acoustiques 410 comprennent des éléments acoustiques creux complexes 412 ayant une forme se rétrécissant progressivement entre une base et un sommet.

Le corps 420 de l'élément d'obturation 400 comprend en outre un passage 420 s'étendant de la première face à la deuxième face du corps. Le passage 420 est situé entre les trois cellules acoustiques 410 de sorte que, dans chaque surface perpendiculaire à l'axe du passage 420, le centre du passage 420 soit situé au centre du triangle formé par les centres des cellules acoustiques 410. Le passage 420 peut présenter toutes les caractéristiques et variations décrites précédemment.

Dans cet exemple illustré sur la figure 10, le joint présentera une forme triangulaire.

Dans les exemples présentés précédemment, le corps de l'élément d'obturation renferme au moins deux cellules acoustiques. On ne sort bien entendu pas du cadre de l'invention si l'élément d'obturation ne renferme qu'une unique cellule acoustique.

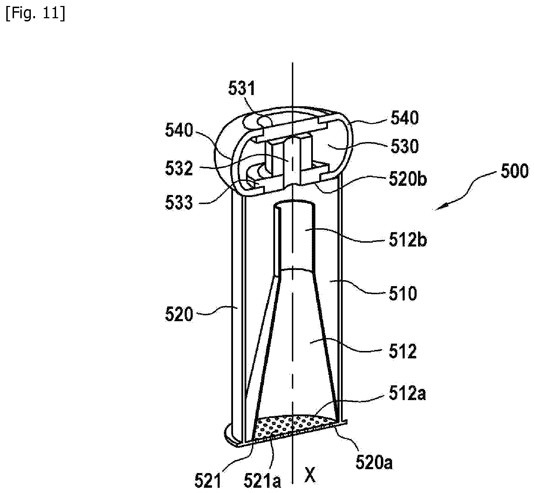

Par exemple, la figure 11 illustre un élément d'obturation 500 comprenant un corps 520 renfermant une unique cellule acoustique 510 s'étendant selon une direction X entre une première face 520a du corps 520 et une deuxième face 520b du corps 520. La cellule acoustique 510 comprend un élément acoustique creux complexe 512 ayant une forme se rétrécissant progressivement entre une base 512a et un sommet 512b.

L'élément d'obturation 500 comprend, en outre du corps 520, une cavité d'étanchéité 530 s'étendant depuis la deuxième face 520b du corps 520. Comme illustré sur la figure 11, la cavité d'étanchéité 530 est délimitée par la deuxième face 520b du corps 520, par un joint d'étanchéité déformable 540 et par une platine rigide 531.

La platine rigide 531 et le joint d'étanchéité 540 peuvent présenter toutes les caractéristiques et variations décrites précédemment, et leur forme est arrondie pour s'adapter à la géométrie de l'élément d'obturation 500.

Le joint d'étanchéité déformable 540 peut être fixé à la deuxième face 520b du corps 520 au moyen d'une platine de fixation 533. La platine de fixation 533 peut présenter toutes les caractéristiques et variations décrites précédemment, mais comprend dans cet exemple un unique orifice 532, qui débouche d'un côté dans la cavité 530 et de l'autre côté à l'intérieur du corps 520. L'orifice 532 permet le passage d'un ou plusieurs objets à travers la platine de fixation 533, le ou les objets insérés permettant la déformation du joint 540 entre sa première position, dite d'étanchéité ou de repos, et sa deuxième position, dite de montage ou de démontage.

De préférence, l'orifice 532 est dirigé selon la direction X et traverse la platine de fixation 533 en son centre. L'orifice 532 peut être taraudé. L'orifice 532 peut être cylindrique et peut présenter une section de diamètre compris entre 3 mm et 10 mm, de préférence de 5 mm. Les portions de la platine de fixation 533 situées autour de l'orifice 532 peuvent s'étendre vers l'intérieur de la cavité 530, afin d'assurer un meilleur guidage de tout objet inséré à l'intérieur de l'orifice 532.

De préférence, la platine de fixation 533 peut comprendre un clapet à l'entrée ou à la sortie de l'orifice 532, qui peut s'ouvrir du fait de l'insertion d'un objet à l'intérieur de l'orifice. Ce clapet permet de boucher l'orifice 532 lorsqu'aucun objet n'est inséré à l'intérieur dudit orifice 532, de sorte à obtenir une atténuation acoustique de l'élément d'obturation 500 mieux maîtrisée.

La première face 520a du corps 520 est recouverte par une peau acoustique supérieure 521, qui comprend une pluralité de perforations 521a. La peau acoustique supérieure 521 peut être amovible : elle peut être retirée pour permettre l'insertion de l'objet servant à déformer le joint entre sa première et sa deuxième position, puis replacée pour assurer sa fonction acoustique. La peau acoustique supérieure peut par ailleurs être dotée d'une perforation située dans le prolongement de l'orifice qui traverse la platine de fixation, de taille suffisante pour permettre l'insertion de l'objet servant à déformer le joint entre sa première et sa deuxième position sans avoir besoin de retirer la peau acoustique amovible.

## Revendications

1. Ensemble acoustique (1) comprenant un panneau acoustique multicellulaire (100) présentant au moins une cavité traversante (120) selon une direction X, **caractérisé en ce que** l'ensemble acoustique (1) comprend en outre au moins un élément d'obturation (200) comprenant un corps (220) renfermant une ou plusieurs cellules acoustiques (210), le corps (220) pouvant être inséré dans la cavité (120) et s'étendant selon la direction X entre une première face (220a) et une deuxième face (220b), l'élément d'obturation (200) comprenant en outre un joint (240) sur la deuxième face (220b) du corps (220) apte à assurer l'étanchéité avec le panneau acoustique (100).

2. Ensemble acoustique (1) selon la revendication 1, dans lequel le corps (220) de l'élément d'obturation (200) épouse la forme de la cavité (120) lorsqu'il est inséré dans ladite cavité (120).

3. Ensemble acoustique (1) selon la revendication 1 ou 2, dans lequel le joint (240) de l'élément d'obturation (200) est déformable entre une position de repos ou d'étanchéité, dans laquelle le joint (240) s'étend au-delà de la périphérie du corps (220) perpendiculairement à la direction X, et une position de montage ou de démontage, dans laquelle le joint (240) ne s'étend pas au-delà de la périphérie du corps (220) perpendiculairement à la direction X.

4. Ensemble acoustique (1) selon la revendication 3, dans lequel l'élément d'obturation (200) comprend en outre un passage (222) s'étendant depuis le joint (240) et débouchant sur la première face (220b) du corps (220), configuré pour permettre l'insertion d'un objet (5) apte à déformer le joint (240) de sa position de repos à sa position de montage ou de démontage.

5. Ensemble acoustique (1) selon la revendication 4, dans lequel le passage (222) comprend au moins une portion taraudée.

6. Ensemble acoustique (1) selon l'une quelconque des revendications 1 à 5, dans lequel chaque cellule (110) du panneau acoustique (100) et chaque cellule (210) de l'élément d'obturation (200) comprend un élément acoustique creux (112, 212) ayant une forme se rétrécissant progressivement entre une base (112a, 212a) et un sommet (112b, 212b).

7. Procédé de montage d'un ensemble acoustique (1) selon l'une quelconque des revendications 1 à 6, comprenant le placement d'au moins un élément d'obturation (200) dans au moins une cavité traversante (120) du panneau acoustique multicellulaire (100), ledit élément d'obturation (200) occupant le volume défini par la cavité (120) de sorte que la première face (220a) du corps (220) de l'élément d'obturation (200) soit située dans le prolongement d'une première face (100a) du panneau acoustique (100) et que le joint (240) de l'élément d'obturation (200) réalise l'étanchéité entre la deuxième face (220b) du corps (220) de l'élément d'obturation (200) et une deuxième face (100b) du panneau acoustique (100) opposé à la première face (100a) du panneau (100).

8. Procédé de démontage d'un ensemble acoustique (1) selon l'une quelconque des revendications 1 à 6, comprenant le retrait d'au moins un élément d'obturation (200) d'une cavité traversante (120) du panneau acoustique multicellulaire (100) par déformation du joint (240) dudit élément d'obturation (200).

9. Procédé de réparation d'un panneau acoustique multicellulaire (1000) comprenant une zone endommagée (1300), comprenant les étapes suivantes :
- la réalisation d'au moins une cavité traversante (1200) selon une direction X par retrait des cellules (1101, 1102) présentes au moins en partie dans la zone endommagée (1300),
- la fourniture d'au moins un élément d'obturation (2000) comprenant un corps (2200) renfermant une ou plusieurs cellules acoustiques (2100), le corps (2200) épousant la forme de la cavité (1200) et s'étendant selon la direction X entre une première face (2200a) et une deuxième face (2200b), l'élément d'obturation (2000) comprenant en outre un joint (2400) sur la deuxième face (2200b),
- le placement dudit élément d'obturation (2000) dans la cavité traversante (1200), l'élément d'obturation (2000) occupant le volume défini par la cavité de sorte que la première face (2200a) du corps (2200) de l'élément d'obturation (2000) soit située dans le prolongement d'une première face (1000a) du panneau acoustique (1000) et que le joint (2400) de l'élément d'obturation (2000) réalise l'étanchéité entre la deuxième face (2200b) du corps (2200) de l'élément d'obturation (2000) et une deuxième face (1000b) du panneau acoustique (1000) opposé à la première face (1000a).

10. Procédé de réparation selon la revendication 9, dans lequel le joint (2400) de l'élément d'obturation (2000) est déformable entre une position de repos ou d'étanchéité, dans laquelle le joint (2400) s'étend au-delà de la périphérie du corps (2200) perpendiculairement à la direction X, et une position de montage ou de démontage, dans laquelle le joint (2400) ne s'étend pas au-delà de la périphérie du corps (2200) perpendiculairement à la direction X, et dans lequel l'élément d'obturation (2000) comprend en outre un passage (2220) s'étendant depuis le joint (2400) et débouchant sur la première face (2200a) du corps (2200), le placement de l'élément d'obturation (2000) dans la cavité traversante (1200) comprenant les étapes suivantes :
- l'insertion d'un objet à l'intérieur du passage (2220) pour déformer le joint (2400) de sa position de repos ou d'étanchéité à sa position de montage ou de démontage,
- la placement de l'élément d'obturation (2000) dans la cavité (1200) du panneau acoustique multicellulaire (1000) en maintenant le joint (2400) dans sa position de montage ou de démontage, ledit élément d'obturation (2000) occupant le volume défini par la cavité (1200) de sorte que la première face (2200a) du corps (2200) de l'élément d'obturation (2200) soit située dans le prolongement d'une première face (1000a) du panneau acoustique (1000),
- le retrait de l'objet inséré dans le passage (2220) pour permettre au joint (2400) de reprendre sa position de repos ou d'étanchéité, de sorte que le joint (2400) réalise l'étanchéité entre la deuxième face (2200b) du corps (2200) de l'élément d'obturation (2000) et une deuxième face (1000b) du panneau acoustique (1000) opposé à la première face (1000a).

11. Elément d'obturation (200) comprenant un corps (220) s'étendant selon une direction X entre une première face (220a) et une deuxième face (220b) et renfermant une ou plusieurs cellules acoustiques (210), la première face (220a) comprenant une ou plusieurs peaux acoustiques (221), ledit élément d'obturation (200) comprenant en outre une cavité d'étanchéité (230) délimitée au moins par la deuxième face (220b) du corps (220) et par un joint déformable (240).

12. Elément d'obturation (200) selon la revendication 11, dans lequel le joint (240) est déformable entre une position de repos ou d'étanchéité, dans laquelle le joint (240) s'étend au-delà de la périphérie du corps (220) perpendiculairement à la direction X, et une position de montage ou de démontage, dans laquelle le joint (240) ne s'étend pas au-delà de la périphérie du corps (220) perpendiculairement à la direction X.

13. Elément d'obturation (200) selon la revendication 12, comprenant en outre un passage (222) s'étendant depuis la cavité d'étanchéité (230) et débouchant sur la première face (220b) du corps (220), configuré pour permettre l'insertion d'un objet (5) apte à déformer le joint (240) de sa position de repos à sa position de montage ou de démontage.

14. Elément d'obturation (200) selon l'une quelconque des revendications 11 à 13, comprenant en outre une platine rigide (231) s'étendant perpendiculairement à la direction X de sorte que la cavité d'étanchéité (230) soit délimitée par la deuxième face (220b) du corps (220), par le joint déformable (240) et par la platine rigide (231), le joint déformable (240) reliant les bords de la platine rigide (231) à la deuxième face (220b) du corps (220).

## Patentansprüche

1. Akustische Baugruppe (1), umfassend eine mehrzellige Akustikplatte (100), die mindestens einen Durchgangshohlraum (120) gemäß einer Richtung X der akustischen Baugruppe (1) aufweist,
**dadurch gekennzeichnet, dass**
der akustische Baugruppe (1) ferner mindestens ein Verschlusselement (200) umfasst, das einen Körper (220) umfasst, der eine oder mehrere Akustikzellen (210) verschließt, wobei der Körper (220) in den Hohlraum (120) eingeführt werden kann und sich gemäß der Richtung X zwischen einer ersten Fläche (220a) und einer zweiten Fläche erstreckt, das Verschlusselement (200) ferner eine Dichtung (240) an der zweiten Fläche (220b) des Körpers (220) umfasst, die geeignet ist, die Dichtheit mit der Akustikplatte (100) sicherzustellen.

2. Akustische Baugruppe (1) nach Anspruch 1, wobei sich der Körper (220) des Verschlusselements (200) an die Form des Hohlraums (120) anpasst, wenn er in den Hohlraum (120) eingeführt wird.

3. Akustische Baugruppe (1) nach Anspruch 1 oder 2, wobei die Dichtung (240) des Verschlusselements (200) zwischen einer Ruhe- oder Abdichtungsstellung, in der sich die Dichtung (240) über den Rand des Körpers (220) hinaus senkrecht zu der Richtung X erstreckt, und einer Montage- oder Demontagestellung, in der sich die Dichtung (240) nicht über den Rand des Körpers (220) hinaus senkrecht zu der Richtung X erstreckt, verformbar ist.

4. Akustische Baugruppe (1) nach Anspruch 3, wobei das Verschlusselement (200) ferner einen Durchlass (222) umfasst, der sich von der Dichtung (240) aus erstreckt und auf die erste Fläche (220b) des Körpers (220) mündet, der dazu ausgestaltet ist, die Einführung eines Objekts (5) zu ermöglichen, das geeignet ist, die Dichtung (240) aus ihrer Ruhestellung in ihre Montage- oder Demontagestellung zu verformen.

5. Akustische Baugruppe (1) nach Anspruch 4, wobei der Durchlass (222) mindestens einen Gewindeabschnitt umfasst.

6. Akustische Baugruppe (1) nach einem der Ansprüche 1 bis 5, wobei jede Zelle (110) der Akustikplatte (100) und jede Zelle (210) des Verschlusselements (200) ein akustisches Hohlelement (112, 212) umfassen, das eine sich zwischen einer Basis (112a, 212a) und einer Spitze (112b, 212b) allmählich verjüngende Form aufweist.

7. Verfahren zur Montage einer akustischen Baugruppe (1) nach einem der Ansprüche 1 bis 6, umfassend Platzierung mindestens eines Verschlusselements (200) in mindestens einem Durchgangshohlraum (120) der mehrzelligen Akustikplatte (100), wobei das Verschlusselement (200) das durch den Hohlraum (120) definierte Volumen derart einnimmt, dass sich die erste Fläche (220a) des Körpers (220) des Verschlusselements (200) in der Verlängerung einer ersten Fläche (100a) der Akustikplatte (100) befindet, und wobei die Dichtung (240) des Verschlusselements (200) die Dichtheit zwischen der zweiten Fläche (220b) des Körpers (220) des Verschlusselements (200) und einer zweiten Fläche (100b) der Akustikplatte (100), die der ersten Fläche (100a) der Platte (100) gegenüberliegt, herstellt.

8. Verfahren zur Demontage einer akustischen Baugruppe (1) nach einem der Ansprüche 1 bis 6, umfassend Entfernung mindestens eines Verschlusselements (200) aus einem Durchgangshohlraum (120) der mehrzelligen Akustikplatte (100) durch Verformung der Dichtung (240) des Verschlusselements (200).

9. Verfahren zur Reparatur einer mehrzelligen Akustikplatte (1000), umfassend einen beschädigten Bereich (1300), umfassend die folgenden Schritte:
- Herstellung mindestens eines Durchgangshohlraums (1200) gemäß einer Richtung X durch Entfernung von Zellen (1101, 1102), die zumindest teilweise in dem beschädigten Bereich (1300) vorhanden sind,
- Bereitstellung mindestens eines Verschlusselements (2000), umfassend einen Körper (2200), der eine oder mehrere Akustikzellen (2100) verschließt, wobei sich der Körper (2200) an die Form des Hohlraums (1200) anpasst und sich gemäß der Richtung X zwischen einer ersten Fläche (2200a) und einer zweiten Fläche (2200b) erstreckt, wobei das Verschlusselement (2000) ferner eine Dichtung (2400) an der zweiten Fläche (2200b) umfasst,
- Platzierung des Verschlusselements (2000) in dem Durchgangshohlraum (1200), wobei das Verschlusselement (2000) das durch den Hohlraum definierte Volumen derart einnimmt, dass sich die erste Fläche (2200a) des Körpers (2200) des Verschlusselements (2000) in der Verlängerung einer ersten Fläche (1000a) der Akustikplatte (1000) befindet und dass die Dichtung (2400) des Verschlusselements (2000) die Dichtheit zwischen der zweiten Fläche (2200b) des Körpers (2200) des Verschlusselements (2000) und einer zweiten Fläche (1000b) der Akustikplatte (1000), die der ersten Fläche (1000a) gegenüberliegt, herstellt.

10. Verfahren zur Reparatur nach Anspruch 9, wobei die Dichtung (2400) des Verschlusselements (2000) zwischen einer Ruhe- oder Abdichtungsstellung, in der sich die Dichtung (2400) über den Rand des Körpers (2200) hinaus senkrecht zu der Richtung X erstreckt, und einer Montage- oder Demontagestellung, in der sich die Dichtung (2400) nicht über den Rand des Körpers (2200) hinaus senkrecht zu der Richtung X erstreckt, verformbar ist und wobei das Verschlusselement (2000) ferner einen Durchlass (2220) umfasst, der sich von der Dichtung (2400) aus erstreckt und auf die erste Fläche (2200a) des Körpers (2200) mündet, wobei die Platzierung des Verschlusselements (2000) in dem Durchgangshohlraum (1200) die folgenden Schritte umfasst:
- Einführung eines Objekts in das Innere des Durchlasses (2220), um die Dichtung (2400) aus ihrer Ruhe- oder Abdichtungsstellung in ihre Montage- oder Demontagestellung zu verformen,
- Platzierung des Verschlusselements (2000) in dem Hohlraum (1200) der mehrzelligen Akustikplatte (1000), während die Dichtung (2400) in ihrer Montage- oder Demontagestellung gehalten wird, wobei das Verschlusselement (2000) das durch den Hohlraum (1200) definierte Volumen derart einnimmt, dass sich die erste Fläche (2200a) des Körpers (2200) des Verschlusselements (2200) in der Verlängerung einer ersten Fläche (1000a) der Akustikplatte (1000) befindet,
- Entfernung des in den Durchlass (2220) eingeführten Objekts, um es der Dichtung (2400) zu ermöglichen, ihre Ruhe- oder Abdichtungsstellung derart wieder einzunehmen, dass die Dichtung (2400) die Dichtheit zwischen der zweiten Fläche (2200b) des Körpers (2200) des Verschlusselements (2000) und einer zweiten Fläche (1000b) der Akustikplatte (1000), die der ersten Fläche (1000a) gegenüberliegt, herstellt.

11. Verschlusselement (200), umfassend einen Körper (220), der sich gemäß einer Richtung X zwischen einer ersten Fläche (220a) und einer zweiten Fläche (220b) erstreckt und eine oder mehrere Akustikzellen (210) verschließt, wobei die erste Fläche (220a) eine oder mehrere akustische Membranen (221) umfasst, das Verschlusselement (200) ferner einen Abdichtungshohlraum (230) umfasst, der zumindest durch die zweite Fläche (220b) des Körpers (220) und durch eine verformbare Dichtung (240) begrenzt ist.

12. Verschlusselement (200) nach Anspruch 11, wobei die Dichtung (240) zwischen einer Ruhe- oder Abdichtungsstellung, in der sich die Dichtung (240) über den Rand des Körpers (220) hinaus senkrecht zu der Richtung X erstreckt, und einer Montage- oder Demontagestellung, in der sich die Dichtung (240) nicht über den Rand des Körpers (220) hinaus senkrecht zu der Richtung X erstreckt, verformbar ist.

13. Verschlusselement (200) nach Anspruch 12, ferner umfassend einen Durchlass (222), der sich von dem Abdichtungshohlraum (230) aus erstreckt und auf die erste Fläche (220b) des Körpers (220) mündet, der dazu ausgestaltet ist, die Einführung eines Objekts (5) zu ermöglichen, das geeignet ist, die Dichtung (240) aus ihrer Ruhestellung in ihre Montage- oder Demontagestellung zu verformen.

14. Verschlusselement (200) nach einem der Ansprüche 11 bis 13, ferner umfassend eine steife Platte (231), die sich senkrecht zu der Richtung X derart erstreckt, dass der Abdichtungshohlraum (230) durch die zweite Fläche (220b) des Körpers (220), durch die verformbare Dichtung (240) und durch die steife Platte (231) begrenzt ist, wobei die verformbare Dichtung (240) die Ränder der steifen Platte (231) mit der zweiten Fläche (220b) des Körpers (220) verbindet.

## Claims

1. An acoustic assembly (1) comprising a multicellular acoustic panel (100) having at least one through cavity (120) along a direction X, **characterized in that** the acoustic assembly (1) further comprises at least one sealing element (200) comprising a body (220) enclosing one or more acoustic cells (210), the body (220) being able to be inserted into the cavity (120) and extending along the direction X between a first face (220a) and a second face (220b), the sealing element (200) further comprising a seal (240) on the second face (220b) of the body (220) able to ensure the sealing with the acoustic panel (100).

2. The acoustic assembly (1) as claimed in 1, wherein the body (220) of the sealing element (200) fits the shape of the cavity (120) when it is inserted into said cavity (120).

3. The acoustic assembly (1) as claimed in claim 1 or 2, wherein the seal (240) of the sealing element (200) is deformable between a rest or sealing position, wherein the seal (240) extends beyond the periphery of the body (220) perpendicular to the direction X, and a mounting or dismounting position, wherein the seal (240) does not extend beyond the periphery of the body (220) perpendicular to the direction X.

4. The acoustic assembly (1) as claimed in claim 3, wherein the sealing element (200) further comprises a passage (222) extending from the seal (240) and opening onto the first face (220b) of the body (220), configured to allow the insertion of an object (5) able to deform the seal (240) from its rest position into its mounting or dismounting position.

5. The acoustic assembly (1) as claimed in claim 4, wherein the passage (222) comprises at least one tapped portion.

6. The acoustic assembly (1) as claimed in any of claims 1 to 5, wherein each cell (110) of the acoustic panel (100) and each cell (210) of the sealing element (200) comprises a hollow acoustic element (112, 212) having a shape gradually tapering between a base (112a, 212a) and an apex (112b, 212b).

7. A method for mounting an acoustic assembly (1) as claimed in any of claims 1 to 6, comprising the placing of at least one sealing element (200) in at least one through cavity (120) of the multicellular acoustic panel (100), said sealing element (200) occupying the volume defined by the cavity (120) such that the first face (220a) of the body (220) of the sealing element (200) is located in the extension of a first face (100a) of the acoustic panel (100) and the seal (240) of the sealing element (200) ensures the sealing between the second face (220b) of the body (220) of the sealing element (200) and a second face (100b) of the acoustic panel (100) opposite the first face (100a) of the panel (100).

8. A method for dismounting an acoustic assembly (1) as claimed in any of claims 1 to 6, comprising the removing of at least one sealing element (200) from a through cavity (120) of the multicellular acoustic panel (100) by deforming the seal (240) of said sealing element (200).

9. A method for repairing a multicellular acoustic panel (1000) comprising a damaged area (1300), comprising the following steps:
- producing at least one through cavity (1200) along a direction X by removing the cells (1101, 1102) present at least in part in the damaged area (1300),
- supplying at least one sealing element (2000) comprising a body (2200) enclosing one or more acoustic cells (2100), the body (2200) fitting the shape of the cavity (1200) and extending along the direction X between a first face (2200a) and a second face (2200b), the sealing element (2000) further comprising a seal (2400) on the second face (2200b),
- placing said sealing element (2000) in the through cavity (1200), the sealing element (2000) occupying the volume defined by the cavity such that the first face (2200a) of the body (2200) of the sealing element (2000) is located in the extension of a first face (1000a) of the acoustic panel (1000) and the seal (2400) of the sealing element (2000) ensures the sealing between the second face (2200b) of the body (2200) of the sealing element (2000) and a second face (1000b) of the acoustic panel (1000) opposite the first face (1000a).

10. The repairing method as claimed in claim 9, wherein the seal (2400) of the sealing element (2000) is deformable between a rest or sealing position, wherein the seal (2400) extends beyond the periphery of the body (2200) perpendicular to the direction X, and a mounting or dismounting position, wherein the seal (2400) does not extend beyond the periphery of the body (2200) perpendicular to the direction X, and wherein the sealing element (2000) further comprises a passage (2220) extending from the seal (2400) and opening onto the first face (2200a) of the body (2200), the placing of the sealing element (2000) in the through cavity (1200) comprising the following steps:
- inserting an object into the passage (2220) to deform the seal (2400) from its rest or sealing position into its mounting or dismounting position,
- placing the sealing element (2000) in the cavity (1200) of the multicellular acoustic panel (1000) while retaining the seal (2400) in its mounting or dismounting position, said sealing element (2000) occupying the volume defined by the cavity (1200) such that the first face (2200a) of the body (2200) of the sealing element (2200) is located in the extension of a first face (1000a) of the acoustic panel (1000),
- removing the object inserted into the passage (2220) to allow the seal (2400) to regain its rest or sealing position, such that the seal (2400) ensures the sealing between the second face (2200b) of the body (2200) of the sealing element (2000) and a second face (1000b) of the acoustic panel (1000) opposite the first face (1000a).

11. A sealing element (200) comprising a body (220) extending along a direction X between a first face (220a) and a second face (220b) and enclosing one or more acoustic cells (210), the first face (220a) comprising one or more acoustic skins (221), said sealing element (200) further comprising a sealing cavity (230) delimited at least by the second face (220b) of the body (220) and by a deformable seal (240).

12. The sealing element (200) as claimed in claim 11, wherein the seal (240) is deformable between a rest or sealing position, wherein the seal (240) extends beyond the periphery of the body (220) perpendicular to the direction X, and a mounting or dismounting position, wherein the seal (240) does not extend beyond the periphery of the body (220) perpendicular to the direction X.

13. The sealing element (200) as claimed in claim 12, further comprising a passage (222) extending from the sealing cavity (230) and opening onto the first face (220b) of the body (220), configured to allow the insertion of an object (5) able to deform the seal (240) from its rest position into its mounting or dismounting position.

14. The sealing element (200) as claimed in any of claims 11 to 13, further comprising a stiff plate (231) extending perpendicular to the direction X such that the sealing cavity (230) is delimited by the second face (220b) of the body (220), by the deformable seal (240) and by the stiff plate (231), the deformable seal (240) connecting the edges of the stiff plate (231) to the second face (220b) of the body (220).
